# EUROPÄISCHE PATENTSCHRIFT

(11) **EP 2 331 372 B1**
(45) Veröffentlichungstag und Bekanntmachung des Hinweises auf die Patenterteilung: **09.10.2019**
(21) Anmeldenummer: 09737339.3
(22) Anmeldetag: 21.09.2009
(51) Int. Cl.: B60S 1/38, B60S 1/40

(54) **WISCHBLATT SOWIE WISCHBLATT/WISCHARMVERBINDUNG**
WIPER BLADE AND CONNECTION BETWEENA BLADE AND AN ARM
RACLETTE D'ESSUIE-GLACE ET ASSEMBLAGE REALISE ENTRE UN BRAS ET UNE RACLETTE D'UN ESSUIE-GLACE

(30) Priorität: 26.09.2008 DE 102008049273
(43) Veröffentlichungstag der Anmeldung: 15.06.2011
(73) Patentinhaber: Valeo Systèmes d'Essuyage, 78322 Le Mesnil Saint Denis (FR)
(72) Erfinder: EGNER-WALTER, Bruno, 74076 Heilbronn (DE); SCHÄUBLE, Michael, 71665 Vaihingen / Enz (DE)
(74) Vertreter: Patentanwälte Behrmann Wagner PartG mbB
(86) Internationale Anmeldenummer: PCT/EP2009/006778
(87) Internationale Veröffentlichungsnummer: WO 2010/034439

(56) Entgegenhaltungen:
- WO-A1-2006/106006
- DE-A1- 10 326 266

## Beschreibung

Die Erfindung bezieht sich auf ein Wischblatt gemäß Patentanspruch 1 sowie auf eine Wischblatt/Wischarmverbindung, d.h. auf eine Verbindung zwischen einem Wischblatt und einem Wischarm einer Scheibenwischanlage gemäß Patentanspruch 4.

Ein Wischblatt sowie eine Wischblatt/Wischarmverbindung nach dem Oberbegriff der beiden unabhängigen Ansprüche ist aus der DE 103 26 266 A1 bekannt. Das bekannte Wischblatt bzw. die bekannte Wischblatt/Wischarmverbindung zeichnen sich durch im Bereich des Wischblatts bzw. des Adapterelements des Wischblatts vorgesehene Federmittel aus, die beim Verbinden des Wischblatts mit dem entsprechenden Aufnahmebereich des Wischarms eine Federvorspannung erzeugen, die bei einer Demontage des Wischblatts vom Wischarm das Wischblatt bzw. das Adapterteil entgegen der ursprünglichen Füge- bzw. Montagerichtung mit einer Lösekraft beaufschlagen, sodass die Demontage des Wischblatts vom Wischarm vereinfacht wird. Nachteilig bei der aus dem genannten Stand der Technik bekannten Lösung ist es, dass durch das Vorsehen von Federmitteln am Wischblatt bzw. am Adapterteil dieses relativ komplex aufgebaut ist und durch die Federmittel einen relativ großen Bauraum benötigt.

Bekannt sind auch Wischblätter mit einem Wischblattadapter (EP 1 403 156 A1), der in eine am Wischarm vorgesehene und zum freien Ende des Wischarmes hin offene Ausnehmung in einer Fügerichtung einschiebbar und dort durch Verrasten verriegelbar ist. Für das Verrasten ist am Adapterteil, welches in die wischarmseitige Aufnahme mit seiner Rückseite voraus einschiebbar und dort formschlüssig aufgenommen ist, wenigstens eine federnde Rast vorgesehen, die bei am Wischarm befestigtem Wischblatt eine am Wischarm ausgebildete Gegenrast hintergreift. Bei einer bekannten Wischblattausführung ist die federnde Rast an der Oberseite des Wischblattadapters vorgesehen, und zwar für das Verrasten in einer die Gegenrast bildenden Öffnung an der Oberseite des Wischarmes. Bei einer anderen bekannten Wischblattausführung sind an zwei einander gegenüberliegenden und jeweils einer Längsseite des Wischblattes benachbarten Seiten des Wischblattadapters federnde Rasten vorgesehen, und zwar für das Verrasten in Gegenrasten bildenden Öffnungen, die in den Schenkeln des als U-Profil ausgebildeten Wischarms vorgesehen sind.

Bekannt sind weiterhin Wischblätter (WO2007/033827), bei denen am rückwärtigen Ende des Wischblattadapters eine Rast vorgesehen ist, die nach dem Einschieben des Wischblattadapters in die wischarmseitige Aufnahme an Gegenrasten einrastet, die an der Unterseite des Wischarmes gebildet sind.

Ausgehend von dem eingangs genannten Stand der Technik gemäß der DE 103 26 266 A1 liegt der Erfindung die Aufgabe zugrunde, ein Wischblatt bzw. eine Wischblatt/Wischarmverbindung nach den Oberbegriffen der beiden unabhängigen Ansprüche derart weiterzubilden, dass eine einfachere konstruktive Gestaltung des Adapterteils des Wischblatts ermöglicht wird.

Zur Lösung dieser Aufgabe ist ein Wischblatt entsprechend dem Patentanspruch 1 ausgebildet. Eine Wischarm/Wischblattverbindung ist Gegenstand des Patentanspruchs 4.

Weiterbildungen, Vorteile und Anwendungsmöglichkeiten der Erfindung ergeben sich auch aus der nachfolgenden Beschreibung von Ausführungsbeispielen und aus den Figuren. Auch wird der Inhalt der Ansprüche zu einem Bestandteil der Beschreibung gemacht.

Die Erfindung wird im Folgenden anhand der Figuren 5-13 und 16 an Ausführungsbeispielen näher erläutert. Es zeigen.

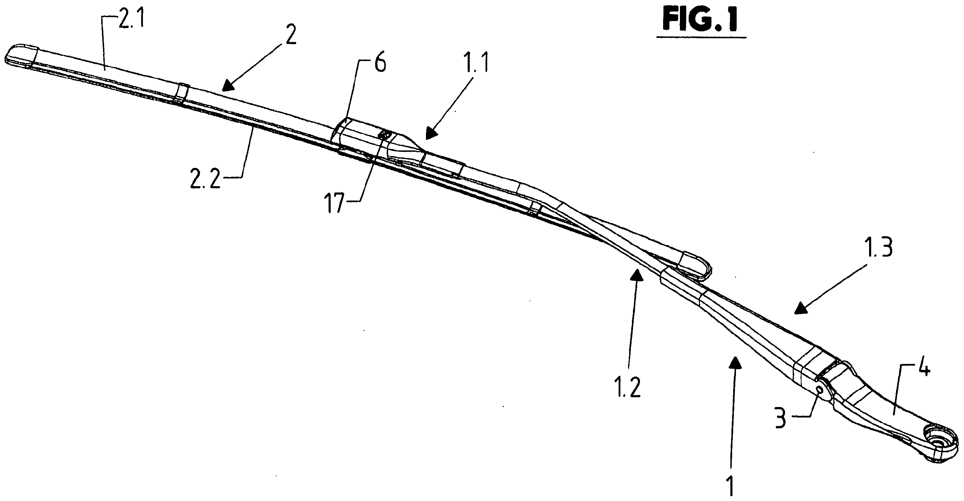

- Fig. 1: in Einzeldarstellung einen Wischarm nach einer nicht zur Erfindung gehörenden Ausführungsform, zusammen mit einem an diesem Wischarm lösbar befestigten Wischblatt;
- Fig. 2: einen Schnitt durch den Wischarm im Bereich seines wischblattseitigen Endes mit einem in dem Wischarm durch Verrasten befestigten Adapterteil eines zweiteiligen Adapters, zusammen mit einem Wischblatt und einem an diesen Wischblatt vorgesehenen Adapterteil;
- Fig. 3: in perspektivischer Darstellung eine Unteransicht der Figur 2;
- Fig. 4: in einer Darstellung ähnlich Figur 2 eine weitere nicht zur Erfindung gehörende Ausführungsform,

- Fig. 5: in Seitenansicht das wischblattseitige Ende eines Wischarms bei einer weiteren Ausführungsform der Erfindung;
- Fig. 6: den Wischarm der Figur 5 in perspektivischer Darstellung und in Unteransicht;
- Fig. 7: einen Schnitt entsprechend der Linie I - I der Figur 5;
- Fig. 8: und 9 Darstellungen ähnlich den Figuren 2 und 3 bei einer weiteren Ausführungsform der Erfindung;
- Fig. 10: einen Schnitt entsprechend der Linie II - II der Figur 8;
- Fig. 11: eine Darstellung wie Figur 10 bei einer weiteren Ausführungsform der Erfindung;
- Fig. 12: und 13 Darstellungen ähnlich den Figuren 2 und 3 bei einer weiteren Ausführungsform;
- Fig. 14: eine Darstellung ähnlich Figur 2 bei einer weiteren, nicht zur Erfindung gehörende Ausführungsform,
- Fig. 15: in vereinfachter Darstellung einen Schnitt durch das wischblattseitige Ende des Wischarms, zusammen mit einer zusätzlichen Rast;
- Fig. 16: in perspektivischer Teildarstellung das wischblattseitige Ende des Wischarmes sowie das vom Wischarm abgenommene Wischblatt bei der Ausführungsform der Figur 13.

In den Figuren ist 1 der Wischarm einer nicht näher dargestellten Scheibenwischanlage. Der Wischarm 1 besitzt bei der dargestellten, nicht zur Erfindung gehörenden Ausführungsform mehrere in Wischarmlängsrichtung aneinander anschließende Wischarmabschnitte, nämlich den Wischarmabschnitt 1.1, an welchem das Wischblatt 2 in der nachstehend noch näher beschriebenen Weise formschlüssig und durch Verrasten wieder lösbar befestigt ist, daran anschließend den als Wischstange ausgebildeten Wischarmabschnitt 1.2 und daran anschließend den Wischarmabschnitt 1.3. Dieser ist über ein Wischarmgelenk 3 mit einem Lagerstück 4 verbunden, welches an der durch einen Scheibenwischerantrieb für die Schwenkbewegung des Wischarmes 1 reversierend angetriebenen Wischwelle der Scheibenwischanlage befestigt ist.

Das bei der dargestellten Ausführungsform als flaches Wischblatt mit Spoiler an der Wischblattoberseite 2.1 ausgeführte Wischblatt 2 bildet an der Wischblattunterseite die übliche Wischlippe 2.2 und weist u.a. zwei sich in Wischblattlängsrichtung erstreckende Federschiene 5 auf.

An der Oberseite des Wischblattes 2 ist ein Wischblattadapter 6 für die lösbare Verbindung mit dem Wischarm 1, d.h. mit dem Wischarmabschnitt 1.1 bzw. mit einer dort gebildeten Aufnahme 7 versehen. Der Wischblattadapter 6 ist zweiteilig ausgeführt, und zwar bestehend aus den beiden Adapterteilen 6.1 und 6.2, von denen das Adapterteil 6.1 durch Einschieben und Verrasten in der nachstehend noch näher beschriebenen Weise formschlüssig und wieder lösbar in der Aufnahme 7 des Wischarmes 1 verankerbar ist und das Adapterteil 6.2 an der Wischblattoberseite 2.1 befestigt ist.

Das Adapterteil 6.2 reicht in eine Ausnehmung 8 des Adapterteils 6.1 hinein. Durch einen die Adapterteilöffnungen 9 und 10 durchgreifenden, nicht dargestellten Gelenkbolzen sind das Adapterteil 6.2 und das an diesen befestigte Wischblatt 2 um einen begrenzten Winkelbetrag relativ zum Adapterteil 6.1 und Wischarm 1 schwenkbar, und zwar um eine Achse senkrecht zur Längserstreckung des Wischblattes 2.

Der Wischarm 1 ist in dem Abschnitt 1.1 und dabei insbesondere auch im Bereich der Aufnahme 7 mit einem zur Wischarmunterseite offenen U- oder C-Profil ausgebildet, und zwar bestehend aus den beiden Schenkeln 11 und 12 und einem diese Schenkel verbindenden Jochabschnitt 13, der im Bereich der Aufnahme 7 die Wischarmoberseite bildet. Die beiden Schenkel 11 und 12 sind an ihren unteren freien Rand mit jeweils wenigstens einer in das U-Profil hineinragenden Abwinklungen 11.1 bzw. 12.1 versehen, so dass die beiden Schenkel 11 und 12 mit ihren Abwinklungen 11.1 und 12.1 und der Jochabschnitt 13 die zum freien Ende des Wischarmes 1 hin offene Ausnehmung 7 bilden, in die der Wischblattadapter mit dem Adapterteil 6.1 in einer Fügerichtung A einschiebbar ist, und zwar mit einer Rückseite des Adapterteils 6.1 vorauseilend und in der Weise, dass das Adapterteil 6.1 formschlüssig in der Aufnahme 7 aufgenommen ist und die Abwinklungen 11.1 und 12.1 gegen die dem Wischblatt 2 zugewandten Unterseite des Adapterteils 6.1 anliegen.

Das Adapterteil 6.1 bildet einen Abschnitt 6.1.1, der bei am Wischarm 1 befestigtem Wischblatt 2 in der Aufnahme 7 aufgenommen ist und einen Abschnitt 6.1.2, welcher bei am Wischarm 1 befestigtem Wischblatt 2 als Kopfstück über das freie Ende des Wischarmes 1 vorsteht und die dort offene Aufnahme 7 auch optisch ansprechend verschließt. Im Bereich beider Abschnitte 6.1.1 und 6.1.2 ist das Adapterteil 6.1 als U-Profil ausgeführt, und zwar mit den beiden Schenkelabschnitten 14 und 15 und einem oberen Jochabschnitt 16, und zwar derart, dass zwischen den Schenkelabschnitten 14 und 15 die Ausnehmung 8 gebildet ist und bei montierten Wischblatt 2 die Schenkelabschnitte 14 und 15 sowie der Jochabschnitt 16 den Innenflächen der Schenkel 11 und 12 bzw. des Jochabschnittes 13 dicht benachbart liegen. Der Jochabschnitt 16 ist in einem Teilbereich als Federzunge 16.1 ausgeführt, die an ihrem der Rückseite des Wischblattadapters 6 benachbarten Ende mit einem eine federnde Rast 17 bildenden und über die Oberseite der Federzunge 16.1 wegstehenden Vorsprung versehen ist, der nach dem Einschieben des Adapterteils 6.1 in die Aufnahme 7 in einer eine Gegenrast bildenden Öffnung 18 verrastet, die in der Oberseite des Wischarmes 1 bzw. in dem Jochabschnitt 13 vorgesehen ist.

Um das Verrasten der Rast 17 in der Öffnung 18 sowie das Lösen der Rastverbindung durch Niederdrücken oder Herausdrücken der Rast 17 aus der Öffnung 18 gegen die Wirkung der Federkraft der Feder- oder Rastzunge 16.1 zu ermöglichen, ist der Querschnitt der Öffnung 17 etwas größer als der Außenquerschnitt des die Rast 17 bildenden Vorsprungs, so dass nach dem Verrasten der Rast 17 in der Öffnung 18 an sich ein gewisses Spiel zwischen dem Wischarmadapter 6 und dem Wischarm 1 zumindest in Längsrichtung der Aufnahme 7 und des Adapterteils 6.1 bzw. in der Achse der Fügerichtung A verbleibt. Um diesem Spiel entgegen zu wirken und während des Wischbetriebes Geräusche zu vermeiden, die durch eine durch dieses Spiel grundsätzlich mögliche Bewegung des Wischblattadapters 6 relativ zum Wischarm 1 erzeugt werden könnten, sind bei der dargestellten Ausführungsform Federmittel vorgesehen, die den am Wischarm 1 befestigten Wischarmadapter 6 bzw. dessen Adapterteil 6.1 zumindest in Richtung der Längserstreckung der Aufnahme 7 bzw. in der Achsrichtung der Fügerichtung A und dabei bevorzugt zumindest entgegen der Fügerichtung A, d.h. in Richtung des Pfeils B vorspannen.

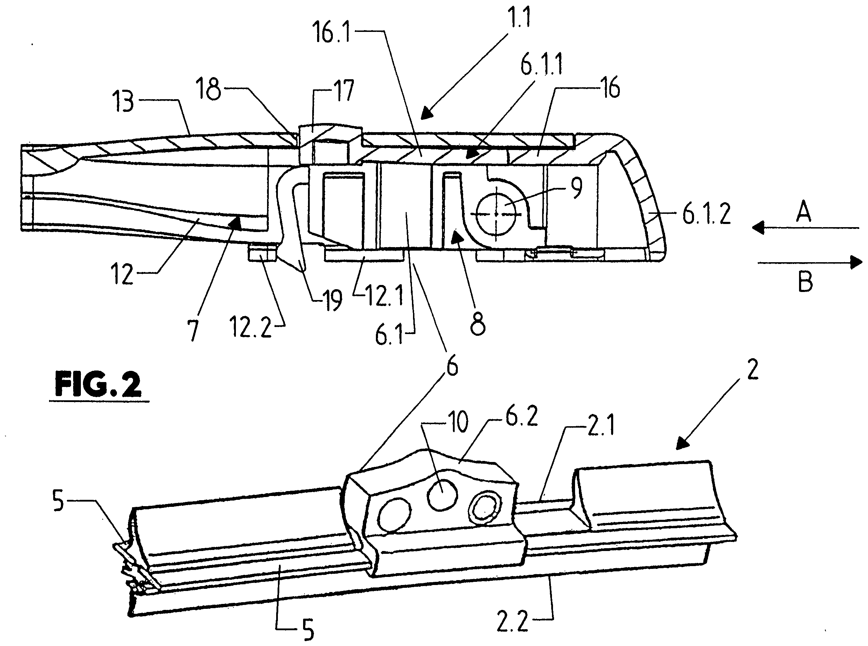

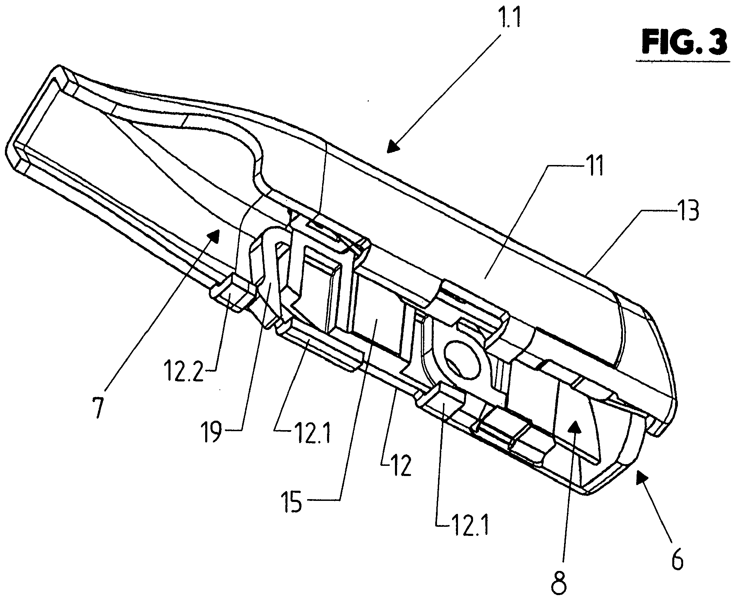

Diese zwischen dem Wischarm 1 und dem Wischblattadapter 6 wirkenden Federmittel sind bei der nicht zur Erfindung gehörenden Ausführungsform der Figuren 2 und 3 von einer federelastischen Zunge 19 gebildet, die an der Rückseite des Adapterteils 6.1 an einem Schenkelabschnitt, beispielsweise am Schenkelabschnitt 15 vorgesehen, beispielsweise angeformt ist. Zunge 19 stützt sich an einer Fläche des Wischarmes 1, nämlich bei der dargestellten Ausführungsform an einer am unteren Rand des Schenkels 12 zusätzlich vorgesehenen Abwinklung 12.2 ab, so dass durch die Zunge 19 eine Federkraft in Richtung des Pfeils B auf das Adapterteil 6.1 gegen die Rastverbindung ausgeübt wird und die Rast 17 damit spielfrei gegen ihre Gegenrast, d.h. gegen den Rand der Öffnung 18 anliegt.

Diese Federkraft hat zusätzlich auch den Vorteil, dass beim Lösen der Rastverbindung durch Niederdrücken bzw. Herausdrücken der Rast 17 aus der Öffnung 18 das Adapterteil 6.1 in Richtung des Pfeils B zumindest soweit verschoben wird, dass ein erneutes selbsttätiges Verrasten der Rast 17 in der Öffnung 18 nicht mehr möglich ist. Hierdurch ist ein sehr vereinfachtes Abnehmen des Wischblattadapters 6 und damit des Wischblattes 2 von dem Wischarm 1 möglich ist, und zwar in der Weise, dass zunächst durch Herausdrücken der Rast 17 aus der Öffnung 18 die Rastverbindung gelöst und dann das Adapterteil 6.1 aus der Aufnahme 7 heraus gezogen wird, ohne dass beim Herausziehen ein weiteres manuelles Niederdrücken der Rast 17 notwendig ist.

Da sich die Zunge 19 an der rückwärtigen Stirnfläche des Schenkelabschnitts 15 befindet, d.h. in der Fortsetzung dieses Schenkelabschnitts und damit außerhalb der zwischen den Schenkelabschnitten 14 und 15 gebildeten Ausnehmung 8, kann diese Ausnehmung zur Aufnahme des oberen Teils des Wischblattadapters 6.2 sowie auch zur Unterbringung weiterer Funktionselementen genutzt werden. Falls eine einzige Federzunge 19 für die Erzeugung der Federkraft nicht ausreichend ist, kann auch an beiden Schenkelabschnitten 14 und 15 jeweils eine federelastische Zunge 19 vorgesehen werden.

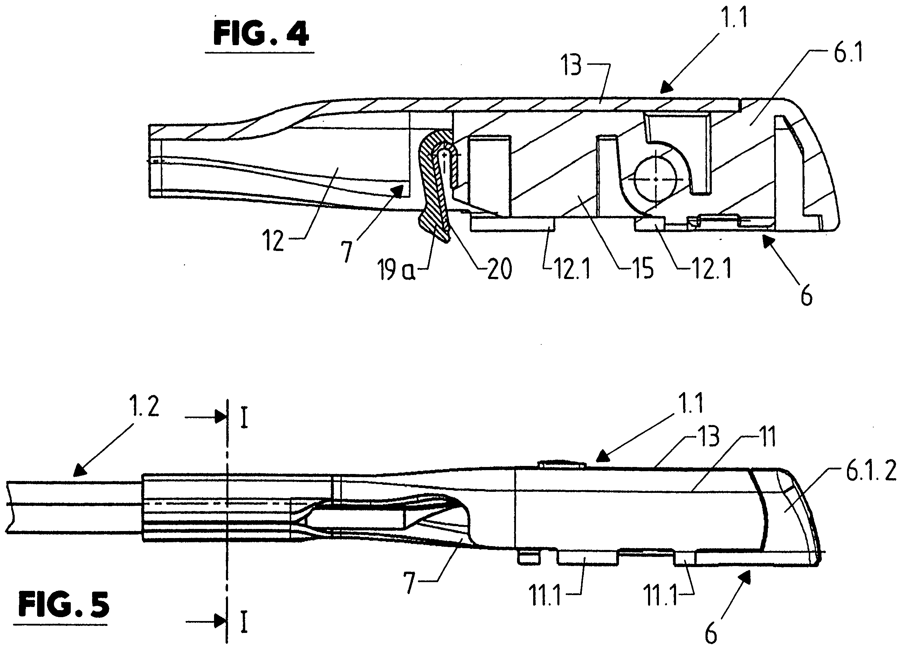

Die Figur 4 zeigt eine nicht zur Erfindung gehörenden Ausführungsform, bei der anstelle der Federzunge 19 eine Federzunge 19a vorgesehen ist, die zusätzlich durch eine Blatt- oder Schenkelfeder 20 aus Metall unterstützt ist, und zwar beispielsweise in der Weise, dass die Federkraft im Wesentlichen durch die Blatt- oder Schenkelfeder 20 erzeugt wird und die beispielsweise aus Kunststoff gefertigte Federzunge 19a mit einer Gegenfläche am Wischarm 1, beispielsweise mit der dortigen Abwinklung 12.2 zusammenwirkt.

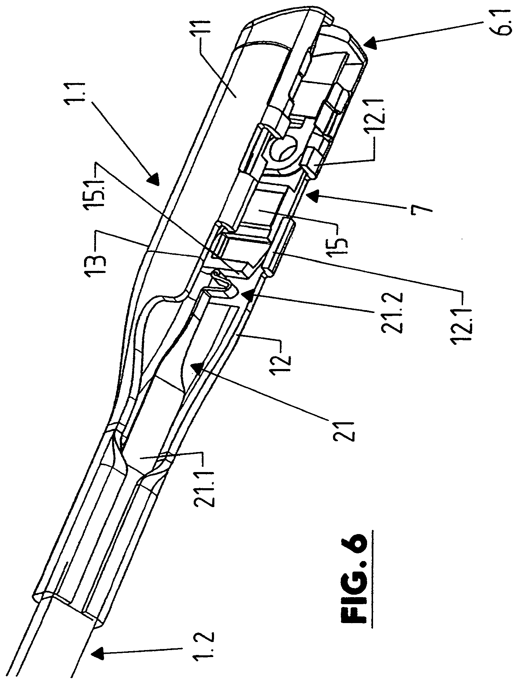

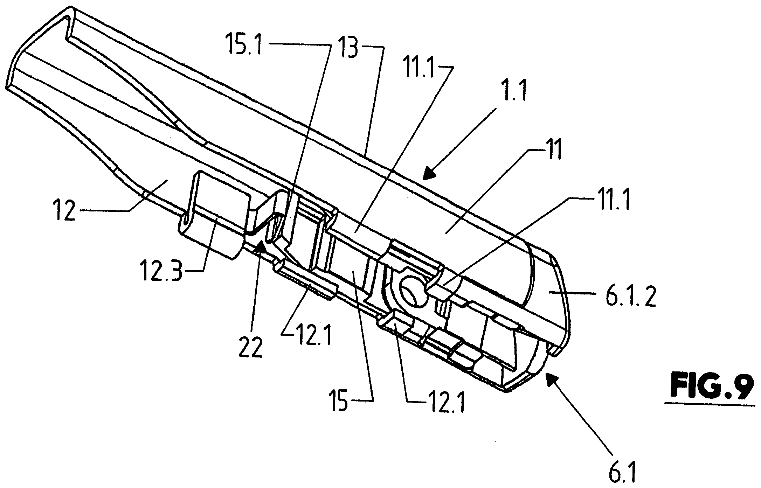

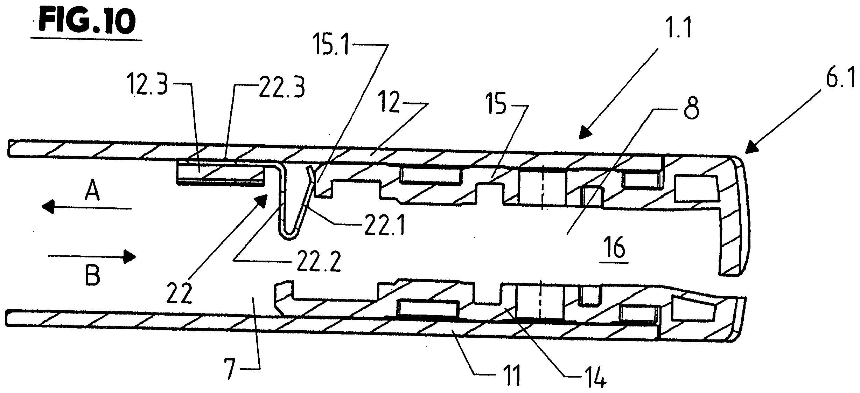

Die Figuren 5 - 7, 8 - 10, 11 sowie 12 und 13 zeigen jeweils erfindungsgemässe Ausführungsformen, bei denen die das Adapterteil 6.1 zumindest entgegen der Fügerichtung A, d.h. in Richtung des Pfeils B vorspannende Federkraft jeweils durch Federmittel am Wischarm 1 erzeugt wird, die bei montiertem Wischblatt 2 gegen die Rückseite des Adapterteils 6.1 bzw. gegen eine dortige Stirnfläche eines der beiden Schenkelabschnitte, nämlich bei den in diesen Figuren dargestellten Ausführungsformen des Schenkelabschnitts 15 einwirken.

Bei der Ausführungsform der Figuren 5 - 7 sind diese Federmittel von einem aus Federstahl hergestellten Federblech 21 gebildet, welches innerhalb des U-Profils des Wischarmabschnitts 1.1 aufgenommen ist und mit einem Ende 21.1 an der durch Verformen des Materials des Wischarmabschnitts 1.1 bzw. durch Crimpen hergestellten Verbindung zwischen den Wischarmabschnitten 1.1 und 1.2 gehalten ist. Die Breite des streifenförmigen Federblechs 21 ist an dem Ende 21.1 etwa gleich der Breite der größeren Querschnittsseiten des von einem Rechteckstangenprofil gebildeten Wischarmabschnitts 1.2, so dass u.a. bei der Herstellung der Crimpverbindung eine Befestigung des Federblechs 21 in der erforderlichen Orientierung gewährleistet ist. Die Befestigung des Endes 21.1 des Federbleches 21 erfolgt somit gleichzeitig mit der Befestigung des Wischarmabschnitts 1.1 an dem Wischarmabschnitt 1.2 bzw. an der von diesem gebildeten Wischarmstange. An dem anderen Ende besitzt das Federblech 21 eine reduzierte Breite und ist dort mit einem U-förmigen oder bügelfederartigen Abschnitt 21.2 ausgeführt und liegt mit einem freien, eingerollten Bügelarmende zur Erzeugung der in Richtung des Pfeils B wirkenden Federkraft gegen die rückwärtige Stirnseite 15.1 des Schenkelabschnitts 15 an.

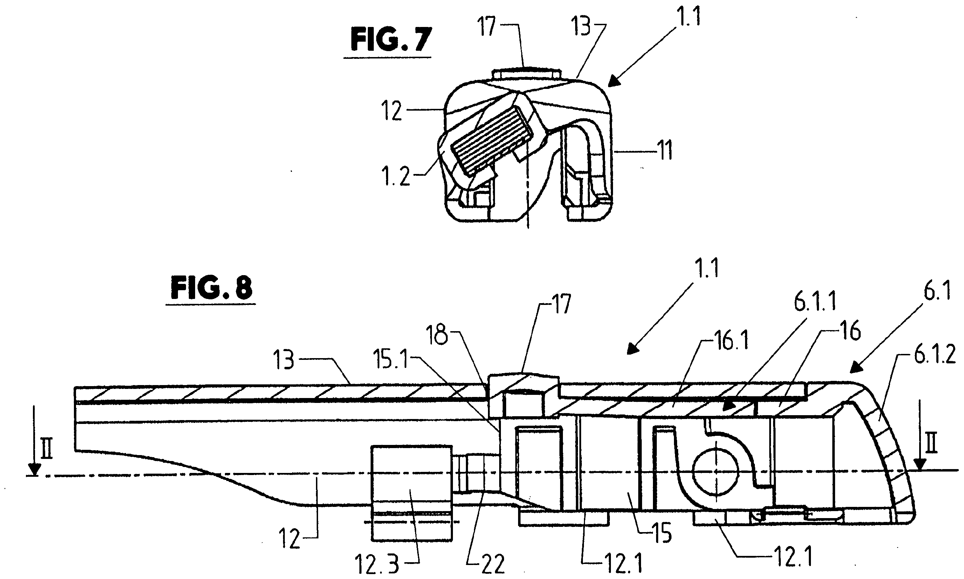

Bei der in den Figuren 8 - 10 dargestellten Ausführungsform wird die in Richtung des Pfeils B auf das Adapterteil 6.1 einwirkende Federkraft durch eine Bügelfeder 22 erzeugt, die aus Federstahl hergestellt ist, und zwar mit zwei miteinander verbundenen Bügel- oder Federarmen 22.1 und 22.2, von denen der Bügelarm 22.2 in einen abgewinkelten Schenkel 22.3 übergeht, der an der Innenseite des Schenkels an diesem flächig anliegend gehalten ist, und zwar bei der dargestellten Ausführungsform durch eine einstückig mit dem Schenkel 12 hergestellte und gegen die Innenfläche des Schenkels 12 umgebogenen Lasche 12.3, zwischen der und dem Schenkel 12 der Schenkel 22.3 festgeklemmt ist. Das freie Ende des Bügelarmes 22.1 liegt gegen die rückwärtige Stirnseite 15.1 des Schenkelabschnitts 15 des Wischblattadapters 6.1 an und erzeugt dabei die in Richtung des Pfeils B auf das Adapterteil 6.1 einwirkende Federkraft.

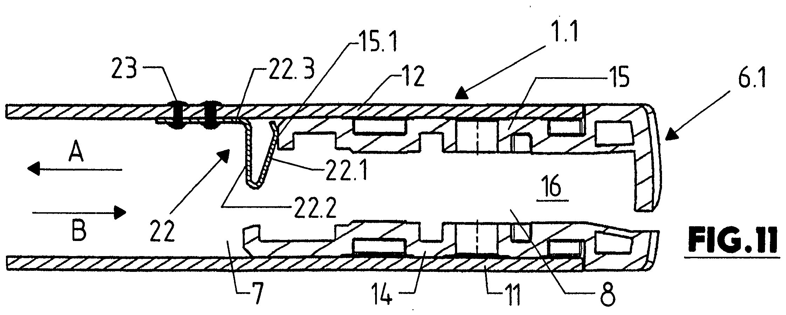

Bei der in der Figur 11 dargestellten Ausführungsform ist die Bügelfeder 22 mit ihrem Schenkel 22.3, der sich wiederum in Fügerichtung A vom Bügelarm 22.2 wegerstreckt durch Befestigungselemente, beispielsweise durch Nieten 23 an der Innenfläche des Schenkels 12 gehalten.

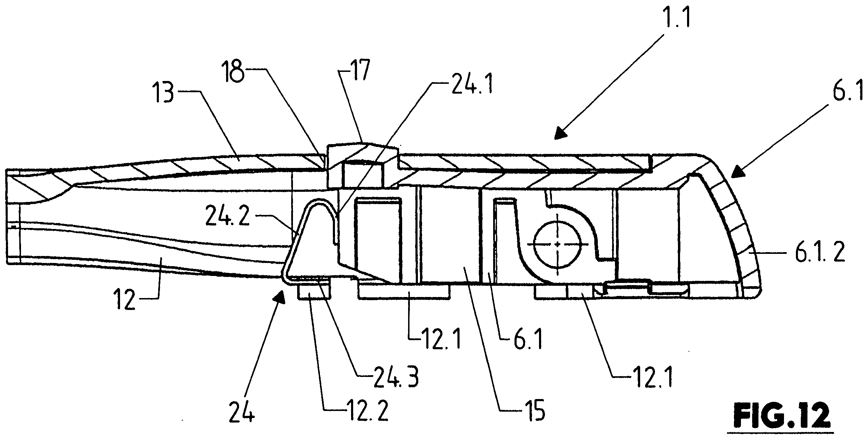

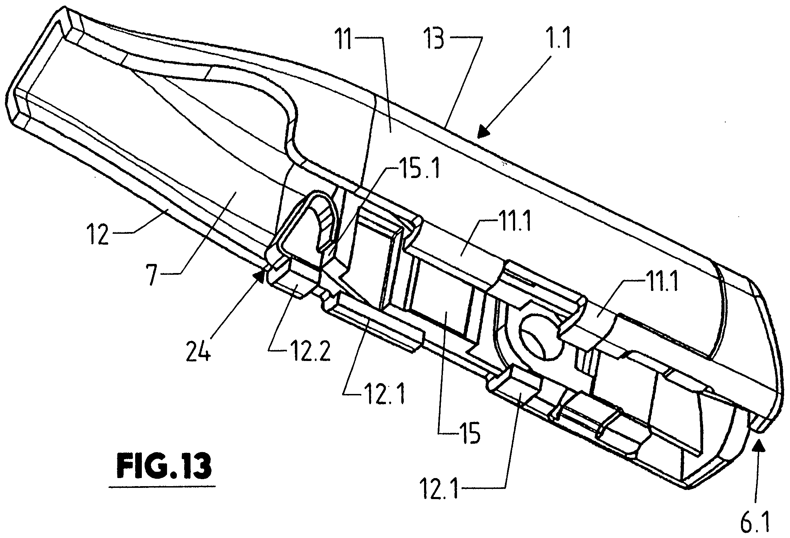

Die Figuren 12 und 13 zeigen eine Ausführungsform der Erfindung, bei der die das Adapterteil 6.1 in Richtung des Pfeils B vorspannende Federkraft durch eine Bügelfeder 24 aus Federblech erzeugt wird. Die Bügelfeder 24 ist im Wesentlichen C-förmig ausgeführt, und zwar mit den aneinander anschließenden Bügel- oder Schenkelabschnitten 24.1, 24.2 und 24.3. Mit dem Bügelabschnitt 24.3 ist die Bügelfeder 24 an der Abwinklung 12.2 des Schenkels 12 in geeigneter Weise, beispielsweise durch Klemmen, Schweißen, Löten, Kleben usw. derart gehalten, dass die Bügelfeder 24 mit dem Bügelabschnitt 24.1 sich unter Federkraft an der rückwärtigen Stirnseite 15.1 des Schenkelabschnitts 15 abstützt.

Im Gegensatz zur Bügelfeder 22, die mit ihrem von den Bügelarmen 22.1 und 22.2 gebildeten Bügelabschnitt senkrecht zur Ebene des Schenkels 12 orientiert ist, ist die Bügelfeder 24 in der Fortsetzung des Schenkelabschnitts 15 angeordnet, und zwar bevorzugt so, dass sie nicht oder nur unwesentlich über die Ebene der Innenfläche des Schenkelabschnittes 15 vorsteht und somit die zwischen den Schenkelabschnitten 14 und 15 gebildete Ausnehmung 18 durch die Bügelfeder 24 nicht eingeengt ist.

Bei einer bevorzugten Ausführungsform der Erfindung, bei der die auf das Adapterteil 6.1 zur Unterdrückung des Spiels zwischen dem Adapterteil 6.1 und dem Wischarm 1 einwirkende, vorzugsweise zumindest entgegen der Fügerichtung A einwirkende Federkraft von einem am Wischarm 1 vorgesehenen Federelement, beispielsweise in Form der Federzunge 19, 19a, der Bügelfedern 21.2, 22 und/oder 24 erzeugt wird, ist zusätzlich zu der Rast 17 eine weitere Rast vorgesehen, die bei am Wischarm 1 montiertem Wischblattadapter 6 mit einer eigenen Gegenrast an der Unterseite des Wischarmes 1 zusammenwirkt, d.h. insbesondere an einem Bereich, der schwerer zugänglich ist. Diese zusätzliche Rast oder Rastverbindung hat den entscheidenden Vorteil, dass es bei einem Fehlverhalten oder Versagen einer der Rasten, beispielsweise durch Beschädigung, durch Alterung, durch unsachgemäße Handhabung oder Montage nicht zu einem Lösen des Wischblattes 2 vom Wischarm kommt.

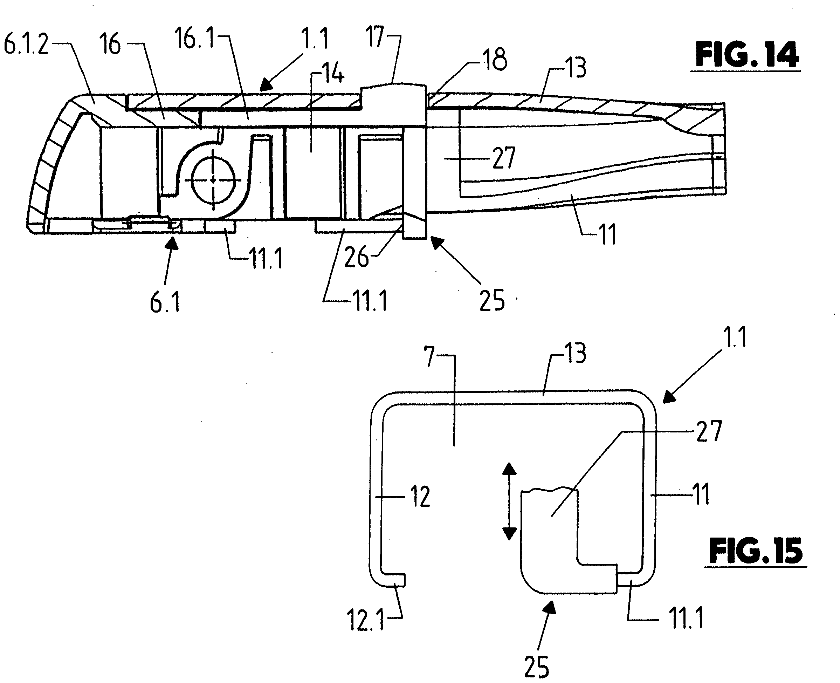

In den Figuren 14 und 15 ist als Beispiel diese zusätzliche federnde Rast mit 25 bezeichnet, die am rückwärtigen Ende des Adapterteils 6.1 vorgesehen ist und mit einer Gegenfläche an der Unterseite des Wischarmes 1 zusammenwirkt, und zwar beispielsweise mit dem der offenen Seite der Aufnahme 7 abgewandten Seite einer Abwinklung 11.1 am Schenkel 11. Die Rast 25 ist dabei beispielsweise seitlich an einem unteren Ende eines Steges 27 vorgesehen, der mit seinem oberen Ende mit dem freien Ende der Federzunge 16.1 verbunden ist und zwar im Bereich der Rast 17. Der Steg 27 erstreckt sich von der Federzunge 16.1 nach unten, und zwar derart, dass er seitlich vom Rand der Abwinklung11.1 liegt und so die Rast 25 beim Einschieben des Adapterteils 6.1 in die Aufnahme 7 (bei federelastisch nach unten gebogener Federzunge 16.1) zunächst entlang der Unterseite der Abwinklung 11.1 gleitet und schließlich hinter dieser Abwinklung einrastet, wie dies in der Figur 14 dargestellt ist.

Bei dieser Ausführung ist für die beiden Rasten 17 und 25 eine gemeinsame Federzunge 16.1 vorgesehen. Selbstverständlich sind auch Ausführungen denkbar, bei denen für die zusätzliche Rast eigenständige Federmittel, beispielsweise eigenständige Federzungen vorgesehen sind und dabei beispielsweise auch in der Form das die Bewegung der zusätzlichen Rast 25 beim Verrasten und Lösen nicht gleichsinnig mit der Rast 17 erfolgt, sondern in einer von der Bewegung der Rast 17 abweichenden Achsrichtung, beispielsweise in einer senkrecht zur Bewegung der Rast 17 orientierten Achsrichtung, z.B. in einer Achsrichtung senkrecht zu den Schenkelabschnitten 14 und 15. Weiterhin besteht die Möglichkeit, die zusätzliche Rast 25 so auszubilden, dass ein Lösen der Verbindung des Wischblattes 2 vom Wischarm 1 erst durch manuelles Betätigen beider Rasten 17 und 25 möglich ist. Bevorzugt ist aber eine Ausbildung, bei der beide Rasten 17 und 25 zumindest für das Lösen der Rastverbindung antriebsmäßig verbunden sind, beispielsweise über den Steg 27 der Figur 14 oder aber über Steuerkurven usw.

Bei allen vorbeschriebenen Ausführungen sind die Federmittel 19, 19a, 20, 21.2, 22, 24 bei mit dem Wischarm 1 verbundenem Wischblatt 2 innerhalb der Aufnahme 7 oder innerhalb des U-Profils des Wischarms 1 vorgesehen.

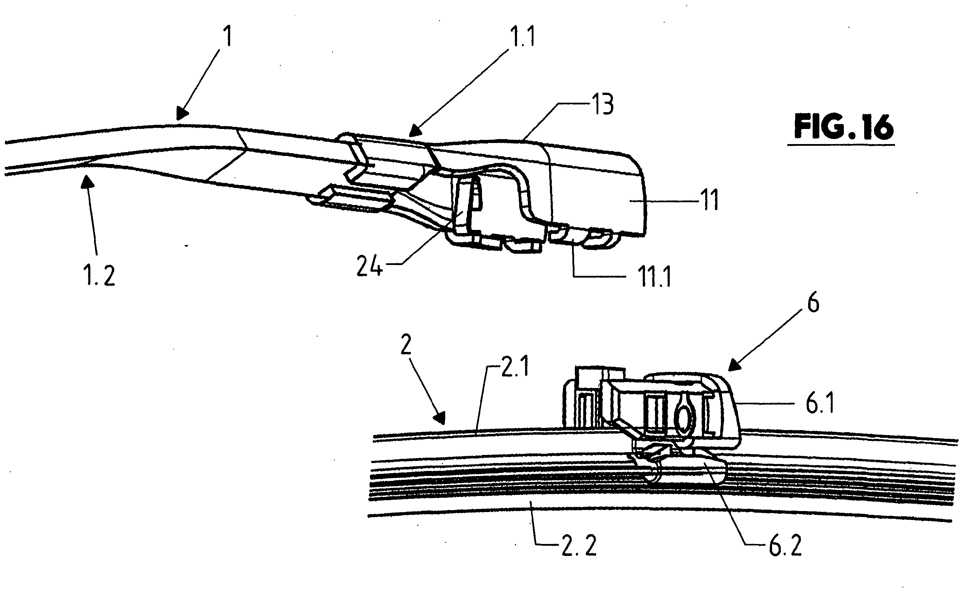

Die Figur 16 zeigt nochmals in perspektivischer Teildarstellung den Wischarm 1 sowie das Wischblatt 2 der Ausführungsform der Figur 13, und zwar bei abgenommenen Wischblatt 2. Wie der Figur 16 zu entnehmen, ist der Wischblattadapter 6 bei dieser Ausführungsform, aber auch bei allen anderen Ausführungsformen der Erfindung in der dem Fachmann bekannten Weise am Wischblatt 2 vormontiert und wird erst bei der Montage des Wischblattes 2 am Wischarm 1 mit diesem in Verbindung gebracht.

Die Erfindung wurde voranstehend an Ausführungsbeispielen beschrieben. Es versteht sich, dass zahlreiche Änderungen sowie Abwandlungen innerhalb des Schutzumfanges der Ansprüche 1 bis 6 möglich sind, ohne dass dadurch der die Erfindung zugrunde liegende Erfindungsgedanke verlassen wird.

## Patentansprüche

1. Wischblatt (2) für Scheibenwischanlagen für Fahrzeuge, mit einem an einer Wischblattoberseite (2.1) vorgesehenen Wischblattadapter (6), der durch Einschieben in einer Fügerichtung (A) und durch anschließendes Verrasten wiederlösbar in einer Aufnahme (7) eines Wischarmes (1) befestigbar ist, wobei zum Verrasten am Wischblattadapter (6) wenigstens eine mit einer Gegenrast (18) .zusammenwirkende Rast (17) vorgesehen ist, und wobei Federmittel (21.2, 22, 24) zum Vorspannen des in der wischarmseitigen Aufnahme (7) aufgenommenen Wischblattadapters (6) oder eines Adapterteils (6.1) gegen die von der wenigstens einen Rast (17) und der zugehörigen Gegenrast (18) gebildete Rastverbindung vorgesehen sind, vorzugsweise in einer Achsrichtung der Fügerichtung (A) oder in einer Achsrichtung (B) entgegen der Fügerichtung (A),
**dadurch gekennzeichnet,**
**dass** am Wischblattadapter (6) oder am Adapterteil (6.1) eine Anlagefläche (15.1) für das Zusammenwirken mit am Wischarm (1) vorgesehenen Federmittel (21.2, 22, 24) ausgebildet ist, wobei die Anlagefläche (15.1) eine rückseitige Stirnseite eines Schenkelabschnitts (15) des im Querschnitt U-förmigen Adapterteils (6.1) ausbildet.

2. Wischblatt nach Anspruch 1, **dadurch gekennzeichnet, dass** die Federmittel von wenigstens einer Bügelfeder (21.2, 22, 24), beispielsweise aus einem federelastischen Kunststoff und/oder aus Metall, z.B. Federstahl gebildet sind.

3. Wischblatt nach Anspruch 1 oder 2, **dadurch gekennzeichnet, dass** die wenigstens eine Rast (17) federnd ausgebildet ist und beispielsweise an wenigstens einer Feder- oder Rastzunge (16.1) vorgesehen ist.

4. Wischblatt/Wischarmverbindung zwischen einem Wischblatt (2) und einem Wischarm (1) einer Scheibenwischanlage für Fahrzeuge, mit einem an einer Wischblattoberseite (2.1) vorgesehenen Wischblattadapter (6), der durch Einschieben in einer Fügerichtung (A) und anschließendes Verrasten wiederlösbar in einer Aufnahme (7) des Wischarmes (1) befestigt ist, wobei zum Verrasten am Wischblattadapter (6) wenigstens eine mit einer Gegenrast (18) zusammenwirkende Rast (17) vorgesehen ist, und wobei durch zwischen dem Wischarm (1) und dem Wischblattadapter (6) wirkende Federmittel (21.2, 22, 24) ein Vorspannen des in der wischarmseitigen Aufnahme (7) aufgenommenen Wischblattadapters (6) oder eines in der wischarmseitigen Aufnahme (7) aufgenommenen Adapterteils (6.1) gegen die von der wenigstens einen Rast (17) und der zugehörigen Gegenrast (18) gebildete Rastverbindung ermöglicht wird, vorzugsweise in einer Achsrichtung der Fügerichtung (A) oder in einer Achsrichtung (B) entgegen der Fügerichtung (A),
**dadurch gekennzeichnet,**
**dass** die Federmittel (21.2, 22, 24) am Wischarm (1) vorgesehen sind, und zwar für ein Zusammenwirken mit wenigstens einer am Wischblattadapter (6) oder am Adapterteil (6.1) gebildeten Anlagefläche (15.1).

5. Wischblatt/Wischarmverbindung nach Anspruch 4, **dadurch gekennzeichnet, dass** die Federmittel von wenigstens einer Bügelfeder (21.2, 22, 24), beispielsweise aus einem federelastischen Kunststoff und/oder aus Metall, z.B. Federstahl gebildet sind.

6. Wischblatt/Wischarmverbindung Anspruch 4 oder 5, **dadurch gekennzeichnet, dass** die Federmittel (21.2, 22, 24) einstückig mit dem Wischarm (1) hergestellt und/oder mit dem Wischarm (1) durch Klemmen, Schweißen, Löten, Kleben oder auf andere geeignete Weise verbunden sind.

## Claims

1. Wiper blade (2) for windscreen wiper modules for vehicles, having a wiper blade adapter (6), provided on a wiper blade upper side (2.1), detachably attachable by insertion in an assembly direction (A) into and subsequent catch engagement in a receptacle (7) of a wiper arm (1), wherein at least one catch (17) interacting with a mating catch (18) is provided for catch engagement on the wiper blade adapter (6), and wherein spring means (21.2, 22, 24) for pretensioning of the wiper blade adapter (6) received in the receptacle (7) on the wiper arm side or of an adapter section (6.1) against the catch connection formed by the at least one catch (17) and the corresponding mating catch (18), preferably in an axial direction of the assembly direction or in an axial direction (B) counter to the assembly direction (A)
**characterised in that**
a contact surface (15.1) for interaction with spring means (21.2, 22, 24) provided on the wiper arm (1) is designed on the wiper blade adapter or on the adapter section (6.1), wherein the contact surface (15.1) is on the rear front face of a shank section (15) of the wiper blade adapter (6.1) having a U-shaped cross section.

2. Wiper blade according to claim 1, **characterised in that** the spring means are formed of at least one bow spring (21.2, 22, 24), for example made of a spring elastic plastic and/or of metal, e.g. spring steel.

3. Wiper blade according to claim 1 or 2, **characterised in that** the at least one catch (17) is designed to be elastic, provided for example on at least one spring or catch tongue (16.1).

4. Wiper blade/wiper arm connection between a wiper blade (2) and a wiper arm (1) of a windscreen wiper module for vehicles, having a wiper blade adapter (6), provided on a wiper blade upper side (2.1), detachably fixed by insertion into and subsequent catch engagement in an assembly direction (A) into a receptacle (7) of the wiper arm (1), wherein at least one catch (17) interacting with a mating catch (18) is provided for catch engagement on the wiper blade adapter (6), and wherein spring means (21.2, 22, 24) acting between the wiper arm (1) and the wiper blade adapter (6) for pretensioning of the wiper blade adapter (6) received in the receptacle (7) on the wiper arm side or of an adapter section (6.1) received in the receptacle on the wiper arm side against the catch connection formed by the at least one catch (17) and the corresponding mating catch (18), preferably in an axial direction of the assembly direction or in an axial direction (B) counter to the assembly direction (A)
**characterised in that**
the spring means (21.2, 22, 24) are provided on the wiper arm (1) and to be more precise for interaction with at least one support surface (15.1) formed on the wiper blade adapter (6) or on the adapter section (6.1)

5. Wiper blade/wiper arm connection according to claim 4, **characterised in that** the spring means are formed of at least one bow spring (21.2, 22, 24), for example made of a spring elastic plastic and/or of metal, e.g. spring steel.

6. Wiper blade/wiper arm connection according to claim 4 or 5, **characterised in that** the spring means (21.2, 22, 24) are manufactured in one piece with the wiper arm (1) and/or are connected to wiper arm (1) by clamping, welding, soldering or gluing or in another suitable manner.

## Revendications

1. Balai d'essuie-glace (2) pour systèmes d'essuie-glace pour véhicules, comprenant un adaptateur de balai d'essuie-glace (6) prévu sur une face supérieure de balai d'essuie-glace (2.1), qui peut être fixé dans un logement (7) d'un bras d'essuie-glace (1) en étant poussé dans une direction d'introduction (A), l'adaptateur (6) de balai d'essuie-glace étant ensuite verrouillé par au moins un contre dispositif de blocage (18) coopérant dans un dispositif de blocage (17), et dans lequel des moyens élastiques (21.2, 22, 24) pour solliciter l'adaptateur de balai d'essuie-glace (6) ou une partie de l'adaptateur (6.1) dans le logement (7) du côté du bras d'essuie-glace contre l'au moins un dispositif de blocage (17) et le contre dispositif de blocage correspondant (18) sont prévus, de préférence dans une direction axiale de la direction d'introduction (A) ou dans une direction axiale (B) inverse à la direction d'introduction (A),
**caractérisé en ce que**
une surface d'appui (15.1) destinée à coopérer avec les moyens élastiques (21.2, 22, 24) prévus sur le bras d'essuie-glace (1) est formée sur l'adaptateur (6) de balai d'essuie-glace (6) ou sur la partie adaptateur (6.1), dans lequel la surface d'appui (15.1) est sur une face arrière d'extrémité d'une partie formant une jambe (15) de la partie d'adaptateur (6.1), laquelle comporte en section transversale une forme de U.

2. Balai d'essuie-glace selon la revendication 1, **caractérisé en ce que** les moyens élastiques sont formés par au moins un ressort en arc (21.2, 22, 24), par exemple en matière plastique élastique à ressort et/ou en métal, par exemple en acier à ressort.

3. Balai d'essuie-glace selon la revendication 1 ou 2, **caractérisé en ce que** l'au moins un dispositif de blocage (17) est élastique et est prévu, par exemple, sur au moins une languette à ressort ou à cran (16.1).

4. Liaison balai d'essuie-glace/bras d'essuie-glace entre un balai d'essuie-glace (2) et un bras d'essuie-glace (1) d'un système d'essuie-glace pour véhicules, comportant un adaptateur (6) de balai d'essuie-glace prévu sur une face supérieure (2.1) de balai d'essuie-glace, qui peut être fixé dans un logement (7) d'un bras d'essuie-glace (1) en étant poussé dans une direction d'introduction (A), l'adaptateur (6) de balai d'essuie-glace étant ensuite verrouillé par au moins un contre dispositif de blocage (18) coopérant dans un dispositif de blocage (17), dans lequel entre le bras (1) et l'adaptateur (6) de balai d'essuie-glace des moyens élastiques (21.2, 22, 24) pour solliciter l'adaptateur de balai d'essuie-glace (6) ou une partie de l'adaptateur (6.1) dans le logement (7) du côté du bras d'essuie-glace contre l'au moins un dispositif de blocage (17) et le contre dispositif de blocage correspondant (18) sont prévus, de préférence dans une direction axiale de la direction d'introduction (A) ou dans une direction axiale (B) inverse à la direction d'introduction (A),
**caractérisé en ce que**
les moyens élastiques (21.2, 22, 24) sont prévus sur le bras d'essuie-glace (1), notamment pour coopérer avec au moins une surface d'appui (15.1) formée sur l'adaptateur de balai d'essuie-glace (6) ou sur la partie adaptateur (6.1).

5. Liaison balai d'essuie-glace/bras d'essuie-glace selon la revendication 4, **caractérisée en ce que** les moyens élastiques sont formés par au moins un ressort en arc (21.2, 22, 24), par exemple en matière plastique élastique à ressort et/ou en métal, par exemple en acier à ressort.

6. Liaison balai d'essuie-glace/bras d'essuie-glace selon la revendication 4 ou 5, **caractérisé en ce que** les moyens élastiques (21.2, 22, 24) sont fabriqués en une seule pièce avec le bras d'essuie-glace (1) et/ou assemblés avec le bras d'essuie-glace (1) par pinçage, soudure, brasage, collage ou d'autres moyens appropriés.
